# EUROPÄISCHE PATENTSCHRIFT

(11) **EP 1 488 857 B1**
(45) Veröffentlichungstag und Bekanntmachung des Hinweises auf die Patenterteilung: **04.05.2011**
(21) Anmeldenummer: 04013993.3
(22) Anmeldetag: 15.06.2004
(51) Int. Cl.: B05B 13/00, B05B 15/12

(54) **Vorrichtung zum Lackieren und Trocknen von Fahrzeugen und Fahrzeugteilen**
Installation for painting and drying of vehicles and vehicle parts
Installation pour peindre et séchage de véhicules et parties de véhicules

(30) Priorität: 17.06.2003 DE 20309327 U
(43) Veröffentlichungstag der Anmeldung: 22.12.2004
(60) Teilanmeldung: 08020317.7
(73) Patentinhaber: Wolf Verwaltungs GmbH & Co. KG, 85290 Geisenfeld (DE)
(72) Erfinder: Richtsfeld, Viktor, Dipl.-Ing., 84048 Mainburg (DE); Lindinger, Kurt, 85290 Geisenfeld (DE); Weber, Sebastian, 85290 Geisenfeld (DE); Obster, Erich, 85104 Pförring (DE); Schiemer, Jürgen, Dipl.-Ing. (FH), 85051 Ingolstadt (DE); Dobler, Alois, 84048 Mainburg (DE)
(74) Vertreter: Meyer, Thorsten

(56) Entgegenhaltungen:
- DE-A- 3 345 422
- DE-A- 3 834 109
- DE-A- 4 431 234
- DE-A- 19 937 193

## Beschreibung

Die Erfindung betrifft eine Vorrichtung, zum Lackieren und Trocknen von Fahrzeugen und Fahrzeugteilen, nach dem Oberbegriff des Anspruches 1.

Eine gattungsgemäße Vorrichtung ist aus DE 4431234 bekannt.

Ziel der Erfindung ist, herkömmliche Lackier- und Trocknungskabinen durch moderne Technologie zu verbessern, optimale Lackierergebnisse zu erzielen, den Energieverbrauch zu reduzieren, und die Anlage möglichst bedienungsfreundlich zu gestalten.

Gemäß der Erfindung wird dies mit den Merkmalen des Kennzeichens des Anspruches 1 erreicht. Weitere Ausgestaltungen der Erfindung sind Gegenstand der Unteransprüche .

Die erfindungsgemäße Abblaseinrichtung arbeitet statt mit Druckluft mit einem Teilvolumen der Prozessluft, die erwärmt wird und mit hoher Geschwindigkeit aus dem zwischen Filterdecke und Beleuchtung angeordneten und eine kompakte Einheit bildenden System von Düsen von oben nach unten durch den Lackier- und Trocknungsraum geblasen wird. Die Düsen sind in der Kabinenwand versenkt angeordnet und der aus den Düsen austretende Luftstrom ist in seiner Strahlrichtung individuell einstellbar. Mit dieser Einrichtung wird die Luft in der Kabine verwirbelt, bei gleichzeitiger Erwärmung wird die relative Luftfeuchtigkeit reduziert und damit wird ein schnelleres Ausdunsten des Wassers aus Lacken, insbesondere Wasserlacken bzw. Lösungsmitteln erreicht. Damit werden Teile des Fahrzeuges, die eine relativ lange Ablüftzeit benötigen, um ein Mehrfaches schneller abgelüftet. Im Gegensatz zu Geräten, die frei im Lackierraum angeordnet sind, ist die Gefahr von Verschmutzungen sehr gering und die Reinigung kann problemlos durchgeführt werden.

Eine derartige erfindungsgemäße Abblaseinrichtung "Multi-Air" ist dadurch besonders einfach bedienbar ausgebildet, dass an der Außenseite der Kabine zur Steuerung der Anlage ein Bedienpanel vorgesehen ist, an dem alle Funktionen bzw. Betriebsarten der Kabine wie Energiesparen, Reinigen, Lackieren, Ablüften, Trocknen, Abkühlen über Bedientasten an dem Bedienpanel übersichtlich und leicht verständlich zusammengefasst und mit Hilfe von Berührschaltern (Touch-Screen) anwählbar sind, so dass beim Antippen der jeweiligen Taste die entsprechend gewählte Betriebsart vollautomatisch abläuft. Bei den Betriebsarten "Reinigen, Ablüften, Trocknen und Abkühlen" von Teilen und ganzen Fahrzeugen wird der Ablauf entscheidend beschleunigt und das Ergebnis verbessert. Insbesondere beim Ablüften von Wasserlack kann die Zeitersparnis bis zu 70% im Vergleich zu herkömmlichen Anlagen betragen. Zusätzlich ist eine Betriebsarten-Leuchte vorgesehen, die für jede der Betriebsarten eine optische Anzeige in Form einer der gewählten Betriebsart entsprechenden Farbe ergibt und damit die gerade eingeschaltete Betriebsart weithin sichtbar und unverwechselbar angezeigt wird.

Für die Betriebsart "Energiesparen" wird die Luftleistung über die Motordrehzahl, die Heizleistung, der Frisch-, Misch- und Umluftbetrieb, sowie Druck und Temperatur eingestellt und gesteuert.

Bei der Betriebsart "Reinigen" wird die Luftleistung im Frisch-, Misch- und Umluftbetrieb, ferner die zuschaltbare Abblaseinrichtung, und die Lufttemperatur eingestellt.

Bei der Betriebsart "Lackieren" wird die volle Luftmenge, der Frischluft-Betrieb, die Temperatur und die Druckregelung (manuell oder automatisch) gesteuert.

Für "Abluftbetrieb" wird die volle oder reduzierte Luftmenge, die Frischluft, Misch- und Umluft , ferner die zuschaltbare Abblaseinrichtung nach einem entsprechende Prozessparameter berücksichtigenden hinterlegten Programm gesteuert.

Für den "Trocknungsbetrieb" werden Mischluft- und Umluftbetrieb, die volle oder reduzierte Luftmenge, die Temperatur, die Zeit sowie das Ein- und Ausschalten der Abblaseinrichtung über hinterlegte Programme mit entsprechenden Prozessparametern gesteuert.

Bei der Betriebsart "Abkühlen" wird der Frisch-, Misch- und Umluftbetrieb, die volle bzw. reduzierte Luftmenge, die Temperatur, die Zeit und die zuschaltbare Abblaseinrichtung durch hinterlegte Programme mit entsprechenden Prozessparametern gesteuert.

Die Dateneingabe erfolgt über das vorbeschriebene Bedienfeld bzw. Bedienpanel, vorzugsweise mit Hilfe von Touch-Screen-Elementen. Die Datenübertragung geschieht über eine Busleitung von einem zentralen Steuergerät zum Hauptschaltschrank an die speicherprogrammierbare Steuerung, die die angeschlossenen Feldgeräte oder Leistungsaggregate mit den Befehlsdaten als Sollwerten speist. Die speicherprogrammierbare Steuerung verarbeitet bzw. vergleicht die ermittelten Istwerte und gibt die erforderlichen Schaltsignale an die Leistungsaggregate. Die Istwerte in Form der Temperatur, des Druckes, der Feuchte und der Prozesse werden am zentralen Steuergerät angezeigt.

Die Wärmerückgewinnung ist bei herkömmlichen Lackieranlagen so ausgelegt, dass sie nur bei der Betriebsart "Lackieren" in Funktion tritt, während bei der Betriebsart "Trocknen" bis zu + 70° C warme Luft ungenutzt abgegeben wird. Mit der neuen Wärmerückgewinnungs-Einrichtung wird bei der Betriebsart "Trocknen" das Lösemittelrohr vor der Wärmerückgewinnung eingeleitet und eine Rückgewinnung von Energie bezogen auf die 10% Außenluft aus den 10% Fortluft erzielt. Der Wärmerückgewinnungsprozess für die Betriebsarten "Trocknen" und "Lackieren" gemäß der Erfindung ergibt sich aus den beigefügten Zeichnungen.

In Verbindung mit der speicherprogrammierbaren Steuerung sind die Motoren der Ventilatoren der erfindungsgemäßen-Vorrichtung mit Frequenzumrichtern ausgestattet. Durch die stufenlose Drehzahlregelung ist eine direkte Antriebsverbindung gewährleistet, wobei die sonst erforderlichen Regelklappen in den Frisch- und Fortluftkanälen entfallen können.

Nachstehend wird die Erfindung in Verbindung mit den Zeichnungen anhand von Ausführungsbeispielen dargestellt. Es zeigt:
- Fig. 1: eine Gesamtansicht der erfindungsgemäßen Lackier- und Trocknungsanlage,
- Fig. 2: eine detalliertere Darstellung der Lackier- und Trocknungsanlage nach Figur 1,
- Fig. 3: eine Darstellung der Wärmerückgewinnung in einer Anlage nach Figur 1 bei der Betriebsart "Trocknen",
- Fig. 4: eine Darstellung der Wärmerückgewinnung in einer Anlage nach Figur 1 bei der Betriebsart "Lackieren",
- Fig. 5: eine schematische Darstellung der zusätzlichen Belüftung des Kabineninnenraumes mittels Abblaseinrichtung, und
- Fig. 6: einen Ausschnitt aus einer Längsansicht der Darstellung nach Figur 5.

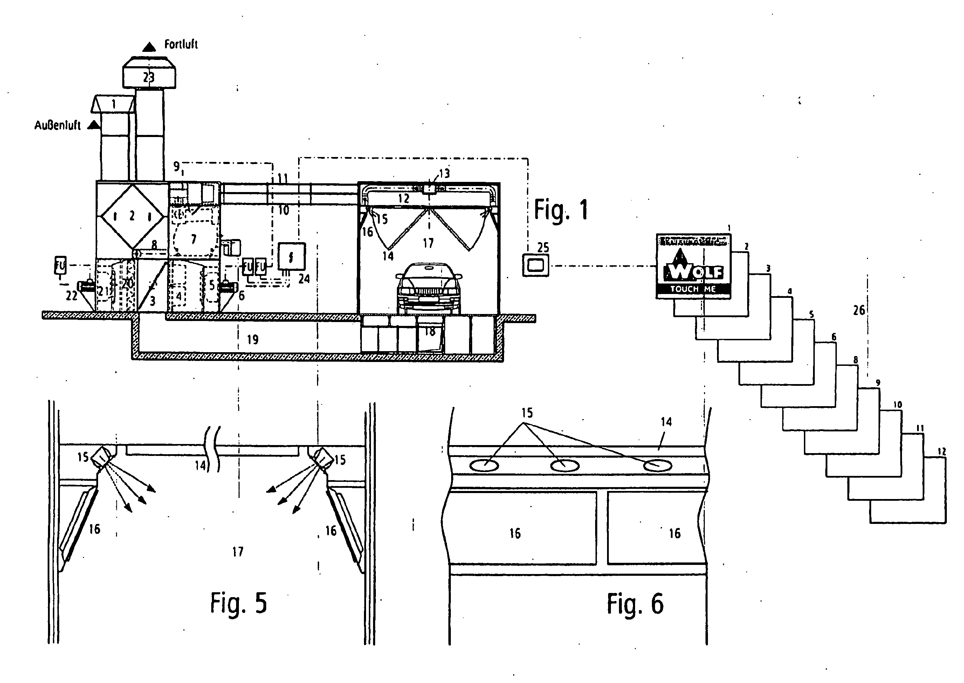

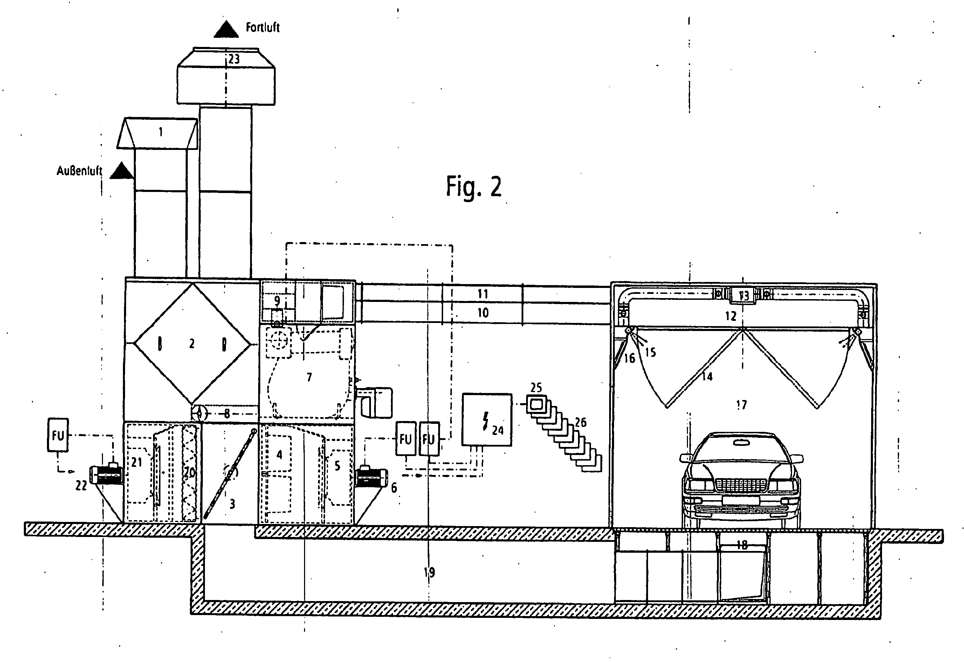

Fig. 1 zeigt eine Gesamtansicht einer Lackieranlage nach der Erfindung mit Ablüftautomatik mit Programmauswahl, mit Ablösesystem und mit Wärmerückgewinnung bei Lackier- und Trockenbetrieb, Fig. 2 ist eine gegenüber Fig. 1 detailliertere Darstellung. Über eine Außenlufthaube 1 gelangt Außenluft durch die Wärmerückgewinnungseinrichtung 2 an eine Umschaltklappe 3, in der der Luftstrom zwischen Lackierbetrieb und Trockenbetrieb umgeschaltet wird. Durch ein Vorfilter 4 wird der Luftstrom, gesteuert über einen Zuluftventilator 5 mit Zuluftmotor 6, über einen Wärmetauscher 7 einem Zuluftgerät "Multi-Air" 9, das außen an der Ausblashaube angeordnet ist und mit einem Lösungsmittelrohr 8 in Verbindung steht, geführt. Vom Zuluftgerät 9 wird der Luftstrom durch einen Zuluftkanal 10 und einen Zuluftkanal "Multi-Air" 11 in den Druckraum 12 über dem Lackierraum 17 und den Verteilkanal 13, die Deckenfiltereinrichtung 14 und Ausblasdüsen 15 im Bereich der an den Seitenwänden der Kabine angeordneten Lampenröhren der Beleuchtung 16 in den Lackierraum 17 gerichtet. Vom Zuluftkanal 10 gehen Kanalverzweigungen aus, die die Zuluft in verschiedene Zonen führen. Der Druckraum 12, in den der Zuluftkanal 11 mündet, wird von der Filterdecke 14 und den Lampenkästen der Beleuchtung 16 gebildet. Dieser Raum nimmt die Ausblasdüsen 15 auf, die die Luftstrahlen 15a in den Lackierraum 17 gerichtet abgeben.

Der Farbnebel im Lackierraum 17 wird über den Farbnebelabscheider 18 am Kabinenboden aufgenommen und die Abluft über den Rückführkanal 19 durch den Vorfilter 20 mit Hilfe des Fortluftventilators 21, der von dem Fortluftmotor 22 angetrieben wird, aus dem Fortluftdeflektor 23 in das Freie abgeleitet. Die Steuerung der gesamten Anlage erfolgt über den Schaltschrank 24, die Betätigung über das Bedientableau 25 und die einzelnen Bedienebenen 26.

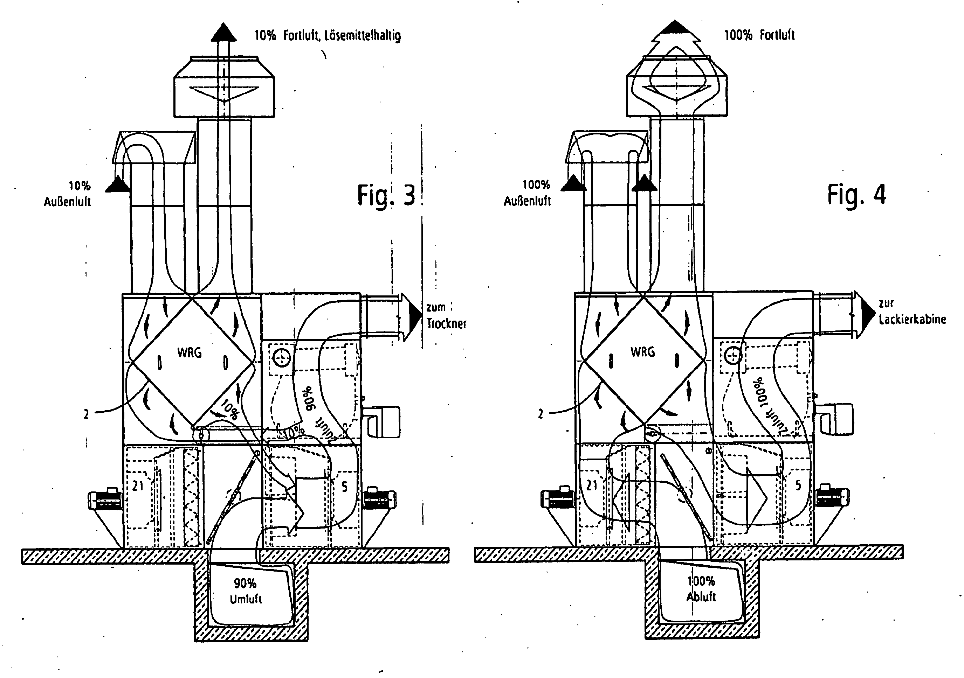

In Fig. 3 ist die Luftführung bei der Betriebsart "Trocknen" dargestellt. Der Ventilator 5 fördert 100% Luftmenge bestehend aus z.B. 90% Umluft und z.B. 10% vorgewärmter Außenluft durch die Wärmerückgewinnungsvorrichtung 2. 10% der Zuluft wird über das Lösemittelrohr 8 über die Wärmerückgewinnungseinrichtung 2 in das Freie gedrückt. Dabei wird die Luft in der Wärmerückgewinnungseinrichtung abgekühlt und gleichzeitig die 10% Außenluft erwärmt. 90% der Zuluft wird in den Trockner gefördert. Die 10% Lösemittel enthaltende Fortluft wird durch den Deflektor 23 abgeleitet.

Die Luftführung bei der Betriebsart "Lackieren" ist in Fig. 4 dargestellt. Hierbei saugt der Zuluftventilator 5 100% Außenluft an, die zu 100% über die Wärmerückgewinnungseinrichtung erwärmt sowie durch den Wärmeaustauscher nacherwärmt in den Lackierraum eingeführt wird. Der Fortluftventilator 21 saugt 100% Abluft aus dem Lakkierraum ab und drückt diese über die Wärmerückgewinnungseinrichtung in das Freie. In der Wärmerückgewinnungseinrichtung wird die Fortluft abgekühlt und gleichzeitig die Außenluft erwärmt.

### Bezugszeichenliste

- 1: Außenlufthaube
- 2: Wärmerückgewinnung
- 3: Umschaltklappe Lackieren/Trocknen
- 4: Vorfilter
- 5: Zuluftventilator
- 6: Zuluftmotor
- 7: Wärmetauscher
- 8: Lösemittelrohr
- 9: Zuluftgerät; Abblaseinrichtung, außen an Ausblashaube angeordnet
- 10: Zuluftkanal
- 11: Zuluftkanal; Abblaseinrichtung
- 12: Druckraum
- 13: Verteilkanalabblaseinrichtung
- 14: Deckenfilter
- 15: Ausblasdüsen, Abblaseinrichtung
- 16: Beleuchtung
- 17: Lackierraum
- 18: Farbnebelabscheider
- 19: Rückluftkanal
- 20: Vorfilter
- 21: Fortluftventilator
- 22: Fortluftmotor
- 23: Fortluftdeflektor
- 24: Schaltschrank
- 25: Bedientableau (Touch-Screen)
- 26: Bedienebenen

## Patentansprüche

1. Vorrichtung für Lackier- und Trocknungsanlagen, Farbspritzanlagen zum Lacktrocknen von Fahrzeugen und Fahrzeugteilen, sowohl zum Trocknen von Wasserlacken als auch von konventionellen Lacken, mit einem geschlossenen Kabinengehäuse und einer Filterdecke (14), wobei durch einen Ventilator (5) Luft als Prozessluft umgewälzt wird und diese über den Deckenquerschnitt verteilt gegen das Fahrzeug gerichtet und am Kabinenboden abgesaugt wird,
wobei eine Abblaseinrichtung (15) für Lacke aller Art vorgesehen ist, aus welcher ebenfalls Prozessluft des Gebläses in das Kabineninnere (17) abgegeben wird, **dadurch gekennzeichnet dass** die Abblaseinrichtung über ein hierzu vorgesehenes Bedienpanel (25) steuerbar ist, und wobei je nach Prozessart unterschiedliche abgestimmte Betriebsarten des Systems über Tasten bzw. Knöpfe mit "Touch-Screen"-Funktion wählbar und einstellbar sind, nämlich
- "Reinigen",
- "Ablüften",
- "Trocknen",
- "Abkühlen",
- "Energiesparen" und "Reinigen",
wobei die Betriebsarten insbesondere über eine "Touch-Screen"-Bedienung wählbar und einstellbar sind.

2. Vorrichtung nach Anspruch 1,
**dadurch gekennzeichnet, dass**
eine Lichtsäule vorgesehen ist, die mittels übereinander oder nebeneinander angeordneter Leuchtelemente an der Kabine die jeweilige Betriebsart in unterschiedlicher Farbe der aufleuchtenden Lampen optisch sichtbar anzeigt.

3. Vorrichtung nach Anspruch 1,
**dadurch gekennzeichnet,**
**dass** die Vorrichtung über das Bedienpanel bzw. die Steueranlage on-line mit einem Firmen-Beratungs-Service verbunden ist.

4. Vorrichtung nach Anspruch 1,
**dadurch gekennzeichnet,**
**dass** zusätzlich zu der für den Lackierbetrieb eingesetzten Wärmerückgewinnung eine speziell für den Trocknungsbetrieb ausgelegte WärmerückgewinnungsVorrichtung (2) vorgesehen ist.

5. Vorrichtung nach Anspruch 1,
**dadurch gekennzeichnet,**
**dass** durch Wahl der Betriebsart "Energiesparen" die Lüfterleistung durch Einstellung der Motordrehzahl, die Heizleistung, der Frisch-, Misch- und Umluftbetrieb, sowie Druck und Temperatur steuerbar sind.

6. Vorrichtung nach Anspruch 1,
**dadurch gekennzeichnet,**
**dass** durch Wahl der Betriebsart "Reinigen" die Lüftersteuerung im Frisch-, Misch- und Umluftbetrieb, ferner eine zuschaltbare Luftführungseinrichtung und die Temperatur einstellbar sind.

7. Vorrichtung nach Anspruch 1,
**dadurch gekennzeichnet,**
**dass** durch Wahl der Betriebsart "Lackieren" die Luftmenge, der Frischluftbetrieb, die Temperatur und die Druckregelung, wahlweise manuell oder automatisch, einstellbar sind.

8. Vorrichtung nach Anspruch 1,
**dadurch gekennzeichnet,**
**dass** durch Wahl der Betriebsart "Ablüften" die volle oder reduzierte Luftmenge, die Zuluft-, Misch- und Umluftmenge, die zuschaltbare Belüftungseinrichtung mit beliebigen Programmen und entsprechenden Prozessparametem einstellbar ist.

9. Vorrichtung nach Anspruch 1,
**dadurch gekennzeichnet,**
**dass** durch Wahl der Betriebsart "Trocknen" der Misch- und Umluftbetrieb, die volle oder reduzierte Luftmenge, die Temperatur, die Zeit und die zusätzliche Belüftungsvorrichtung, jeweils mit hinterlegten Programmen und entsprechenden Prozessparametern steuerbar sind.

10. Vorrichtung nach Anspruch 1,
**dadurch gekennzeichnet,**
**dass** durch die Wahl der Betriebsart "Abkühlen" der Frisch-, Misch- und Umluftbetrieb, die volle oder reduzierte Luftmenge, die Temperatur, die Zeit und die zusätzliche Belüftungsvorrichtung, jeweils mit hinterlegten Programmen und entsprechenden Prozessparametem steuerbar sind.

11. Vorrichtung nach einem der vorausgehenden Ansprüche,
**dadurch gekennzeichnet,**
**dass** die Antriebsmotoren der Ventilatoren mit Frequenzumrichtern gesteuert werden und mit stufenloser Drehzahlregulierung arbeiten.

12. Vorrichtung nach einem der Ansprüche 1 - 10,
**dadurch gekennzeichnet,**
**dass** in der Betriebsart "Trocknen" die Luftführung so ausgelegt ist, dass der Ventilator (5) eine 100%ige Luftmenge fördert, die sich aus 90% Umluft und aus 10% durch die Wärmerückgewinnungseinrichtung (2) vorgewärmter Außenluft zusammensetzt, dass 10% der Zuluft über das Lösemittelrohr (8) über die Wärmerückgewinnungseinrichtung ins Freie gedrückt wird und dabei die Luft in der Rückgewinnungseinrichtung abgekühlt und gleichzeitig die 10% Außenluft erwärmt wird, und dass 90% der Zuluft in den Trockner gefördert wird.

13. Vorrichtung nach einem der Ansprüche 1 -10,
**dadurch gekennzeichnet,**
**dass** in der Betriebsart "Lackieren" die Luftmenge so ausgelegt ist, dass der Zuluftventilator (5) 100% Außenluft ansaugt und 100% Luft über die Wärmerückgewinnungseinrichtung (2) erwärmt sowie im Wärmeaustauscher nacherwärmt in den Lackierraum eingeführt wird, und dass der Fortluftventilator (21) 100% Abluft aus dem Lackierraum saugt und diese über die Wärmerückgewinnungsvorrichtung (2) in das Freie drückt, wo die Fortluft abgekühlt und gleichzeitig die Außenluft erwärmt wird.

## Claims

1. A device for painting and drying systems, paint spraying systems for drying paint on vehicles and vehicle parts and for drying water-based paints, as well as conventional paints, with a closed booth housing and a filter ceiling (14), wherein air is circulated in the form of process air by a fan (5) and this process air is distributed over the ceiling cross section and directed toward the vehicle, as well as removed by suction on the cabin floor, and wherein a blow-off device (15) for paints of all types is provided and process air of the blower is also delivered into the cabin interior (17) from this blow-off device,
**characterized in**
**that** the blow-off device can be controlled by means of a control panel (25) provided for this purpose, and in that different adapted operating modes of the system can be selected and adjusted in dependence on the process type by means of keys or buttons with "Touch-Screen" function, namely
- "cleaning,"
- "flashing off,"
- "drying,"
- "cooling,"
- "energy saving" and "cleaning,"
wherein the operating modes can be selected and adjusted, in particular, by means of "Touch-Screen" operation.

2. The device according to Claim 1,
**characterized in that**
a light column is provided and optically displays the respective operating mode with the aid of individual lamps that are arranged on top of one another or adjacent to one another, namely in the form of different colors of the lamps being illuminated.

3. The device according to Claim 1,
**characterized in**
**that** the device is connected on-line to a corporate consultation service by means of the control panel or the control system, respectively.

4. The device according to Claim 1,
**characterized in**
**that** a heat recovery device (2) that is specially designed for the drying mode is provided in addition to the heat recovery system used for the painting mode.

5. The device according to Claim 1,
**characterized in**
**that** the selection of the operating mode "energy saving" makes it possible to control the fan power by adjusting the motor speed, the heating power, the fresh air, mixed air and circulating air mode, as well as the pressure and temperature.

6. The device according to Claim 1,
**characterized in**
**that** the selection of the operating mode "cleaning" makes it possible to adjust the fan control in the fresh air, mixed air and circulating air mode, as well as a connectable air conduction device and the temperature.

7. The device according to Claim 1,
**characterized in**
**that** the selection of the operating mode "painting" makes it possible to optionally adjust the air quantity, the fresh air mode, the temperature and the pressure control manually or automatically.

8. The device according to Claim 1,
**characterized in**
**that** the selection of the operating mode "flashing off" makes it possible to adjust the full or reduced air quantity, the additional air, mixed air and circulating air quantity and the connectable ventilation device with arbitrary programs and corresponding process parameters.

9. The device according to Claim 1,
**characterized in**
**that** the selection of the operating mode "drying" makes it possible to respectively control the mixed air and circulating air mode, the full or reduced air quantity, the temperature, the time and the additional ventilation device with stored programs and corresponding process parameters.

10. The device according to Claim 1,
**characterized in**
**that** the selection of the operating mode "cooling" makes it possible to respectively control the fresh air, mixed air and circulating air mode, the full or reduced air quantity, the temperature, the time and the additional ventilation device with stored programs and corresponding process parameters.

11. The device according to one of the preceding claims,
**characterized in**
**that** the driving motors of the fans are controlled with frequency converters and operate with infinitely variable speed control.

12. The device according to one of Claimsl-10,
**characterized in**
**that** the air conduction in the operating mode "drying" is realized such that the fan (5) delivers a 100% air quantity that is composed of 90% circulating air and 10% outside air that is pre-heated by means of the heat recovery device (2), in that 10% of the additional air is pushed into the atmosphere by the heat recovery device through the solvent pipe (8) while the air in the recovery device is cooled and the 10% outside air is simultaneously heated, and in that 90% of the additional air is conveyed into the dryer.

13. The device according to one of Claims 1-10,
**characterized in**
**that** the air quantity in the operating mode "painting" is realized such that the fresh air fan (5) takes in 100% outside air and 100% air is heated by means of the heat recovery device (2), as well as introduced into the paint booth after being reheated in the heat exchanger, and in that the exhaust air fan (21) takes in 100% exhaust air from the paint booth and pushes this exhaust air into the atmosphere via the heat recovery device such that the exhaust air is cooled and the outside air is simultaneously heated.

## Revendications

1. Dispositif pour installations de vernissage, de séchage et de pulvérisation de peinture, pour le séchage de vernis sur des véhicules ou des pièces de véhicules, pour le séchage aussi bien de vernis à base d'eau que de vernis classiques, avec un boîtier de cabine fermé et une couverture filtrante (14), de l'air étant brassé par un ventilateur (5) en tant qu'air de processus et réparti sur la section transversale de la couverture en étant orienté contre le véhicule, puis aspiré au fond de la cabine,
un dispositif de soufflage (15) étant prévu pour les vernis en tous genres, permettant également de souffler l'air de processus du souffleur vers l'intérieur de la cabine (17), **caractérisé en ce que** le dispositif de soufflage peut être commandé par un panneau de commande (25) prévu à cet effet, dans lequel différents modes de fonctionnement déterminés du système peuvent être sélectionnés ou réglés en fonction du type de processus, par des touches ou des boutons avec une fonction d'écran tactile, notamment :
- « Nettoyage »
- « Aération »
- « Séchage »
- « Refroidissement »
- « Économies d'énergie » et « Nettoyage »,
les modes de fonctionnement pouvant être sélectionnés et réglés en particulier par une commande à écran tactile.

2. Dispositif selon la revendication 1,
**caractérisé en ce que**
il est prévu une colonne de lumière pour indiquer visuellement les différents modes de fonctionnement avec les différentes couleurs de voyants lumineux, au moyen d'éléments lumineux sur la cabine, disposés les uns au-dessus des autres ou les uns à côté des autres.

3. Dispositif selon la revendication 1,
**caractérisé en ce que**
le dispositif est relié à un service de conseil de l'entreprise par le biais du panneau de commande ou du dispositif de commande.

4. Dispositif selon la revendication 1,
**caractérisé en ce que**
il est en outre prévu un dispositif de récupération de chaleur (2) spécialement conçu pour le mode séchage, en plus de la récupération de chaleur utilisée pour le mode vernissage.

5. Dispositif selon la revendication 1,
**caractérisé en ce que**
le choix du mode de fonctionnement « Économies d'énergie » permet de régler la puissance du souffleur par le réglage du régime moteur, la puissance de chauffe, le fonctionnement avec air frais, air mélangé et air circulant, ainsi que la pression et la température.

6. Dispositif selon la revendication 1,
**caractérisé en ce que**
le choix du mode de fonctionnement « Nettoyage » permet de régler la commande du souffleur en mode air frais, air mélangé ou air circulant, ainsi qu'un dispositif d'aération raccordable et la température.

7. Dispositif selon la revendication 1,
**caractérisé en ce que**
le choix du mode de fonctionnement « Vernissage » permet de régler, manuellement ou automatiquement, la quantité d'air, le fonctionnement avec air frais, la température et la pression.

8. Dispositif selon la revendication 1,
**caractérisé en ce que**
le choix du mode de fonctionnement « Aération » permet de régler la quantité d'air totale ou réduite, la quantité d'air fourni, d'air mélangé et d'air circulant, ainsi que le dispositif d'aération raccordable, avec des programmes au choix et des paramètres de processus correspondants.

9. Dispositif selon la revendication 1,
**caractérisé en ce que**
le choix du mode de fonctionnement « Séchage » permet de commander le fonctionnement avec air mélangé ou air circulant, la quantité d'air totale ou réduire, la température, le temps et le dispositif d'aération supplémentaire, avec des programmes associés et des paramètres de programme correspondants.

10. Dispositif selon la revendication 1,
**caractérisé en ce que**
le choix du mode de fonctionnement "Refroidissement" permet de commander le fonctionnement avec air frais, air mélangé ou air circulant, la quantité d'air totale ou réduire, la température, le temps et le dispositif d'aération supplémentaire, avec des programmes associés et des paramètres de programme correspondants.

11. Dispositif selon l'une des revendications précédentes,
**caractérisé en ce que**
les moteurs d'entraînement des ventilateurs sont commandés avec des convertisseurs de fréquence et travaillent avec une régulation de régime continue.

12. Dispositif selon l'une des revendications 1 à 10,
**caractérisé en ce que**
dans le mode de fonctionnement « Séchage », le guidage de l'air est prévu de telle manière, que le ventilateur (5) déplace 100% d'une quantité d'air composée à 90% d'air circulant et à 10% d'air extérieur préchauffé par le dispositif de récupération de chaleur (2), que 10% de l'air ajouté est évacué vers l'extérieur par le tuyau de solvant (8) par le dispositif de récupération de chaleur (2), l'air dans le dispositif de récupération de chaleur étant refroidi dans le même temps et les 10% d'air extérieur étant simultanément chauffés, et que 90% de l'air ajouté sont transportés vers le séchoir.

13. Dispositif selon l'une des revendications 1 à 10,
**caractérisé en ce que**
dans le mode de fonctionnement « Vernissage », la quantité d'air est prévue de telle manière, que le ventilateur d'air ajouté (5) aspire 100% d'air extérieur et que 100% de l'air sont chauffés par le dispositif de récupération de chaleur (2), puis réchauffés dans l'échangeur de chaleur et introduits dans la chambre de vernissage, et que le ventilateur d'air sortant (21) aspire 100% de l'air sortant à partir de la chambre de vernissage, et évacue celui-ci vers l'extérieur par le biais du dispositif de récupération de chaleur (2), où l'air sortant est refroidi et l'air extérieur est simultanément chauffé.
